# EUROPEAN PATENT APPLICATION

(11) **EP 3 151 201 A1**
(43) Date of publication of application: **05.04.2017**
(21) Application number: 16190702.7
(22) Date of filing: 26.09.2016
(51) Int. Cl.: G06T 17/20, G01C 21/00, G06T 19/20, H03M 7/30

(54) **METHOD OF AND SYSTEM FOR GENERATING SIMPLIFIED BORDERS OF GRAPHICAL OBJECTS**

(30) Priority: 29.09.2015 RU 2015141344
(71) Applicant: Yandex Europe AG, 6005 Luzern (CH)
(72) Inventor: KORZUNOV, Anton Vasilyevich, 142116 Podolsk, Moscow Region (RU)
(74) Representative: Boyce, Conor

(57) **Abstract**

A system for and a method of generating a first and a second simplified borders of a first and a second graphical objects having respectively a first and a second original borders comprising curved border portions being located in a close proximity, the method executable on a computing device, the method comprising: applying a divider having cells (906) to both the first and the second graphical objects such that both original borders are split into a plurality of original fragments, at least some of them being original curved fragments (902, 904); anchoring intersections (602, 604, 622, 624) of the first and the second original borders with the cells (906); responsive to at least one cell houses two curved fragments of different graphical objects, generating instructions to render both simplified objects by using one graphical element for rendering similar simplified fragments (1002, 1004) in both objects, if both simplified curved borders are similar.

## Description

### FIELD OF THE TECHNOLOGY

The present technology relates to method and system for generating simplified borders of graphical objects.

### BACKGROUND

In computer technologies, use of graphical objects is widespread. Graphical objects are used in graphic design, in computer games, in map services, and in many other areas. Computer readable storages of computing devices (both personal devices and other devices, such as servers of service providers) can store information representative of a plurality of graphical objects, both two-dimensional and three dimensional. Such information about graphical objects can be used to generate a visual representation of the graphical objects.

Often, there is a need for simplifying borders of graphical objects. For example, a user zooms out a map, the contours of regions may be presented in a simplified form, some curves may be smoothed, or simplified in other way. Often, simplifying borders of graphical objects is performed on the server side. The server generates borders of simplified graphical objects, and sends the instructions to a client device to render two or more simplified graphical objects, such as two regions on the map. Having received generated borders and instructions, the client devices render borders of objects. Rendering borders of objects may be resource-consuming. Therefore, there is a need in further developing of technologies which would allow save computational resource of client devices.

### SUMMARY

It is thus an object of the present technology to ameliorate at least some of the inconveniences present in the prior art.

In one aspect, implementations of the present technology provide a method of generating a first simplified border of a first graphical object and a second simplified border of a second graphical object. The first graphical object and the second graphical object have respectively a first original border and a second original border. The first original border and the second original border comprise curved border portions being located in a close proximity. The method is executable on a computing device. The method comprises: applying a divider having cells to the first graphical object and the second graphical object such that the first original border is split into a plurality of original fragments of the first original border, at least some original fragments of the first original border being original curved fragments, the second original border is split into a plurality of original fragments of the second original border, at least some original fragment of the second original border being original curved fragments; anchoring intersections of the first original border and the second original border with the cells; determining whether at least one cell houses original curved fragments of both the first original border and the second original border; responsive to a first cell housing a first original curved fragment of the first original border and a second original curved fragment of the second original border, generating within the first cell a first simplified curved fragment and a second simplified curved fragment by applying a simplification rule respectively to the first original curved fragment and to the second original curved fragment, while keeping positions of anchored intersections unchanged; determining whether coordinates of the first simplified curved fragment and the second simplified curved fragment are similar within a pre-defined threshold of variance; responsive to the first simplified curved fragment and the second simplified curved fragment being similar within the pre-defined threshold of variance, generating a first set of rendering instructions, the first set of rendering instructions: being associated with a geometry of one of the first simplified curved fragment and the second simplified curved fragment, and being for rendering a common simplified curved portion representative of both the first simplified curved fragment and the second simplified curved fragment.

In some implementations, the first set of rendering instructions further comprises instruction to render a first portion of the first simplified border of the first graphical object and a second portion of the second simplified border of the second graphical object, the first portion and the second portion respectively excluding the first simplified curved fragment and the second simplified curved fragment.

In some implementations, the first set of rendering instructions further comprises instructions, after rendering the common simplified curved portion representative of both the first simplified curved fragment and the second simplified curved fragment, to use so rendered the common simplified curved portion as two identical border portions to complete the first portion of the first simplified border and to complete the second portion of the second simplified border.

In some implementations, responsive to the first simplified curved fragment and the second simplified curved fragment being distinctive, the method further comprises generating a second set of rendering instructions to render the first simplified border of the first graphical object using the first simplified curved fragment, and to render the second simplified border of the second graphical object using the second simplified curved fragment.

In some implementations, the computing device is a server, the method further comprising receiving, from a client device, a request for rendering instructions for rendering the first simplified border of the first graphical object and the second simplified border of the second graphical object.

In some implementations, the method further comprises sending the first set of rendering instructions being associated with the geometry of one of the first simplified curved fragment and the second simplified curved fragment, and being for rendering the common simplified curved portion representative of both the first simplified curved fragment and the second simplified curved fragment, to the client device.

In some implementations, the first set of rendering instructions further comprises instructions to render a first portion of the first simplified border of the first graphical object and a second portion of the second simplified border of the second graphical object, the first portion and the second portion excluding respectively the first simplified curved fragment and the second simplified curved fragment.

In some implementations, wherein the computing device is a client device having a video card and a processor, the processor being operatively connected to the video card, the method further comprises sending the first set of rendering instructions to render the first simplified border of the first graphical object and to render the second simplified border of the second graphical object, the instructions being associated with the geometry of one of the first simplified curved fragment and the second simplified curved fragment, and being for rendering the common simplified curved portion representative of both the first simplified curved fragment and the second simplified curved fragment, by the processor to the video card.

In some implementations, the first graphical object and the second graphical object are two-dimensional graphical objects.

In some implementations, anchoring intersections of the first original border and the second original border with the cells is anchoring intersection points.

In some implementations, the divider is a two-dimensional grid.

In some implementations, the first graphical object and the second graphical object are three-dimensional graphical objects.

In some implementations, the divider is a three-dimensional divider, and anchoring intersections of the first original border and the second original border with the cells is anchoring intersection lines.

In some implementations, the first original curved fragment comprises sections that consecutively connect a plurality of vertexes of the first original curved fragment, the second original curved fragment comprises sections that consecutively connect a plurality of vertexes of the second original curved fragment, and the simplification rule comprises reducing number of vertexes of the first original curved fragment and of the second original curved fragment.

In some implementations, cells are of a predetermined size.

In some implementations, wherein a minimal number of cells housing original curved fragments of both the first original border and the second original border is predetermined, and responsive to a number of cells housing original curved fragments of both the first original border and the second original border, after applying the divider to the first graphical object and the second graphical object being under said predetermined number, the method further comprises changing a size of cells until a number of cells housing original curved fragments of both the first original border and the second original border reaches the predetermined number.

In some implementations, determining whether coordinates of the first simplified curved fragment and the second simplified curved fragment are similar within the pre-defined threshold of variance, is performed by establishing any one, selected from: coordinates of the first simplified curved fragment and coordinates of the second simplified curved fragment are the same, and discrepancy between coordinates of the first simplified curved fragment and coordinates of the second simplified curved fragment are within a predetermined maximal threshold.

In another aspect, implementations of the present technology provide a computing device for generating a first simplified border of a first graphical object and a second simplified border of a second graphical object. The first graphical object and the second graphical object have respectively a first original border and a second original border. The first original border and the second original border comprise curved border portions being located in a close proximity. The computing device comprises a processor. The computing device comprises an information storage medium. The information storage medium stores computer-readable instructions. The computer-readable instructions, when executed, cause the processor to: apply a divider having cells to the first graphical object and the second graphical object such that the first original border is split into a plurality of original fragments of the first original border, at least some original fragments of the first original border being original curved fragments, the second original border is split into a plurality of original fragments of the second original border, at least some original fragment of the second original border being original curved fragments; anchor intersections of the first original border and the second original border with the cells; determine whether at least one cell houses original curved fragments of both the first original border and the second original border; responsive to a first cell housing a first original curved fragment of the first original border and a second original curved fragment of the second original border, to generate within the first cell a first simplified curved fragment and a second simplified curved fragment by applying a simplification rule respectively to the first original curved fragment and to the second original curved fragment, while keeping positions of anchored intersections unchanged; determine whether coordinates of the first simplified curved fragment and the second simplified curved fragment are similar within a pre-defined threshold of variance; responsive to the first simplified curved fragment and the second simplified curved fragment being similar within the pre-defined threshold of variance, to generate a first set of rendering instructions, the first set of rendering instructions: being associated with a geometry of one of the first simplified curved fragment and the second simplified curved fragment, and being for rendering a common simplified curved portion representative of both the first simplified curved fragment and the second simplified curved fragment.

In some embodiments of the computing device, the first set of rendering instructions further comprises instruction to render a first portion of the first simplified border of the first graphical object and a second portion of the second simplified border of the second graphical object, the first portion and the second portion respectively excluding the first simplified curved fragment and the second simplified curved fragment.

In some embodiments of the computing device, the first set of rendering instructions further comprises instructions, after rendering the common simplified curved portion representative of both the first simplified curved fragment and the second simplified curved fragment, to use so rendered the common simplified curved portion as two identical border portions to complete the first portion of the first simplified border and to complete the second portion of the second simplified border.

In some embodiments of the computing device, responsive to the first simplified curved fragment and the second simplified curved fragment being distinctive, the computer-readable instructions further cause the processor to generate a second set of rendering instructions to render the first simplified border of the first graphical object using the first simplified curved fragment, and to render the second simplified border of the second graphical object using the second simplified curved fragment.

In some embodiments of the computing device, the computing device is a server, and the computer-readable instructions further cause the processor to receive, from a client device, a request for rendering instructions for rendering the first simplified border of the first graphical object and the second simplified border of the second graphical object.

In some embodiments of the computing device, the computer-readable instructions further cause the processor to send the first set of rendering instructions being associated with the geometry of one of the first simplified curved fragment and the second simplified curved fragment, and being for rendering the common simplified curved portion representative of both the first simplified curved fragment and the second simplified curved fragment, to the client device.

In some embodiments of the computing device, the first set of rendering instructions further comprises instructions to render a first portion of the first simplified border of the first graphical object and a second portion of the second simplified border of the second graphical object, the first portion and the second portion excluding respectively the first simplified curved fragment and the second simplified curved fragment.

In some embodiments of the computing device, the computing device is a client device further comprising a video card, the processor of the client device being operatively connected to the video card, and the computer-readable instructions further cause the processor to send the first set of rendering instructions to render the first simplified border of the first graphical object and to render the second simplified border of the second graphical object, the instructions being associated with the geometry of one of the first simplified curved fragment and the second simplified curved fragment, and being for rendering the common simplified curved portion representative of both the first simplified curved fragment and the second simplified curved fragment, to the video card.

In some embodiments of the computing device, the first graphical object and the second graphical object are two-dimensional graphical objects.

In some embodiments of the computing device, anchoring intersections of the first original border and the second original border with the cells is anchoring intersection points.

In some embodiments of the computing device, the divider is a two-dimensional grid.

In some embodiments of the computing device, the first graphical object and the second graphical object are three-dimensional graphical objects.

In some embodiments of the computing device, the divider is a three-dimensional divider, and anchoring intersections of the first original border and the second original border with the cells is anchoring intersection lines.

In some embodiments of the computing device, the first original curved fragment comprises sections that consecutively connect a plurality of vertexes of the first original curved fragment, the second original curved fragment comprises sections that consecutively connect a plurality of vertexes of the second original curved fragment, and the simplification rule comprises reducing number of vertexes of the first original curved fragment and of the second original curved fragment.

In some embodiments of the computing device, cells are of a predetermined size.

In some embodiments of the computing device, wherein a minimal number of cells housing original curved fragments of both the first original border and the second original border is predetermined, and responsive to a number of cells housing original curved fragments of both the first original border and the second original border, after applying the divider to the first graphical object and the second graphical object being under said predetermined number, the computer-readable instructions further cause the processor to change a size of cells until a number of cells housing original curved fragments of both the first original border and the second original border reaches the predetermined number.

In some embodiments of the computing device, to determine whether coordinates of the first simplified curved fragment and the second simplified curved fragment are similar within the pre-defined threshold of variance, the computer readable instruction cause the processor to establish any one, selected from: coordinates of the first simplified curved fragment and coordinates of the second simplified curved fragment are the same, and discrepancy between coordinates of the first simplified curved fragment and coordinates of the second simplified curved fragment are within a predetermined maximal threshold.

In the context of the present specification, unless specifically provided otherwise, a "server" is a computer program that is running on appropriate hardware and is capable of receiving requests (e.g. from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, unless specifically provided otherwise, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, unless specifically provided otherwise, the word "coordinates" serves to define the position of points, and/or lines, or the like, by suitable references. References can be, for example, numbers and/or any other symbols that are used to determine the position of a point, line (including a curve), or plane in a space of a given dimension with respect to a system of lines (axes) or other fixed references.

In the context of the present specification, unless specifically provided otherwise, the expression "information" includes information of any nature or kind whatsoever, comprising information capable of being stored in a database. Thus information includes, but is not limited to data (map data, location data, coordinates, numerical data, etc.), audiovisual works (photos, movies, sound records, presentations etc.), text (opinions, comments, questions, messages, etc.), documents, spreadsheets, etc.

In the context of the present specification, unless specifically provided otherwise, the expression "component" is meant to include software (appropriate to a particular hardware context) that is both necessary and sufficient to achieve the specific function(s) being referenced.

In the context of the present specification, unless specifically provided otherwise, the expression "information storage medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, unless specifically provided otherwise, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first original border" and "third original border" is not intended to imply any particular order, type, chronology, hierarchy or ranking (for example) of/between the original borders, nor is their use (by itself) intended imply that any "second original border" must necessarily exist in any given situation. Further, as is discussed herein in other contexts, reference to a "first" element and a "second" element does not preclude the two elements from being the same actual real-world element. Thus, for example, in some instances, a "first" element and a "second" element may be the same element, in other cases they may be different elements.

In the context of the present specification, unless specifically provided otherwise, the expression "graphical object" is intended to mean any graphical figure which can be displayed on a computer screen (or other video output means). Graphical objects can be linear objects, two-dimensional objects, and three-dimensional objects. Graphical objects can be of any shape. Borders of graphical objects can be straight or curved lines or straight or curved surfaces, depending on the graphical object.

In the context of the present specification, unless specifically provided otherwise, the expression "border" of a graphical object is intended to mean a perimeter or a portion of the perimeter of a graphical object, wherein the word "perimeter" means a path that surrounds a graphical object. A border of a graphical object can comprise border portions, which border portions can be stored as lines, connecting two extreme points of respective perimeter portion. Borders can be lines (in the case of two-dimensional graphical object) or surfaces (in the case of three-dimensional graphical object).

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Fig. 1 is a schematic diagram of a system implemented in accordance with an embodiment of the present technology.
Fig. 2 depicts a non-limiting example of a first graphical object and a second graphical object, the first graphical object and the second graphical object being two-dimensional graphical objects which coordinates are stored on the information storage medium of a computing device of the system of Fig. 1, being implemented in accordance with non-limiting embodiments of the present technology.
Fig. 3 depicts a non-limiting example of the first graphical object being three-dimensional graphical object which coordinates are stored on the information storage medium of the computing device of the system of Fig. 1, being implemented in accordance with non-limiting embodiments of the present technology.
Fig. 4 depicts a non-limiting example of the first graphical object and located nearby the second graphical object, the first graphical object and the second graphical object being three-dimensional graphical objects being stored on the information storage medium of the computing device of the system of Fig. 1, being implemented in accordance with non-limiting embodiments of the present technology.
Fig. 5 depicts a non-limiting examples of dividers being used by a processor of the computing device of the system of Fig. 1.
Fig. 6 depicts a non-limiting example of the first graphical object and the second graphical object of Fig. 2 and a divider of Fig. 5 being a two-dimensional grid, all being implemented in accordance with non-limiting embodiments of the present technology.
Fig. 7 depicts a non-limiting example of the first graphical object and the second graphical object of Fig. 4 and a three dimensional divider of Fig. 5, all being implemented in accordance with non-limiting embodiments of the present technology.
Fig. 8 depicts a non-limiting example of left bottom cell of the three dimensional divider of Fig. 7, the left bottom cell of the three dimensional divider of Fig. 7 comprising original fragments of the first graphical object and of the second graphical object of Fig. 7.
Fig. 9 depicts a non-limiting example of the first graphical object and the second graphical object of Fig. 2 and a divider of Fig. 5 being a two-dimensional grid, and illustrates a first original curved fragment and a second original curved fragment, both curved fragments comprising sections consecutively connecting plurality of vertexes, all being implemented in accordance with non-limiting embodiments of the present technology.
Fig. 10 depicts a non-limiting example of a first simplified curved fragment and a second simplified curved fragment, all being implemented in accordance with non-limiting embodiments of the present technology.

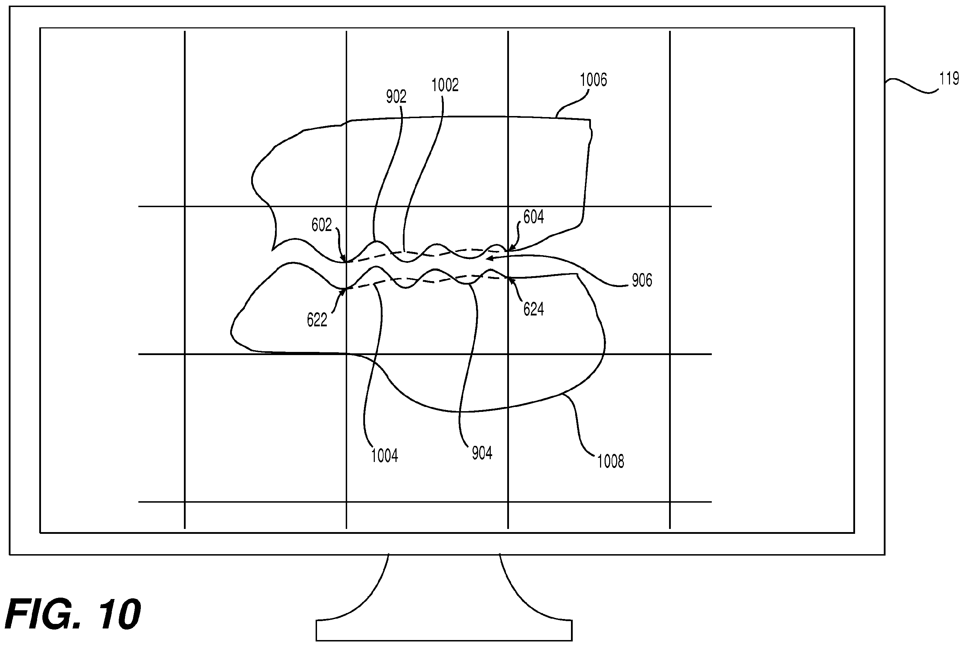

Fig. 10 depicts a block-diagram of a computer-implemented method of generating a first simplified border of the first graphical object and a second simplified border of the second graphical object, the method being non-limiting example of the present technology.

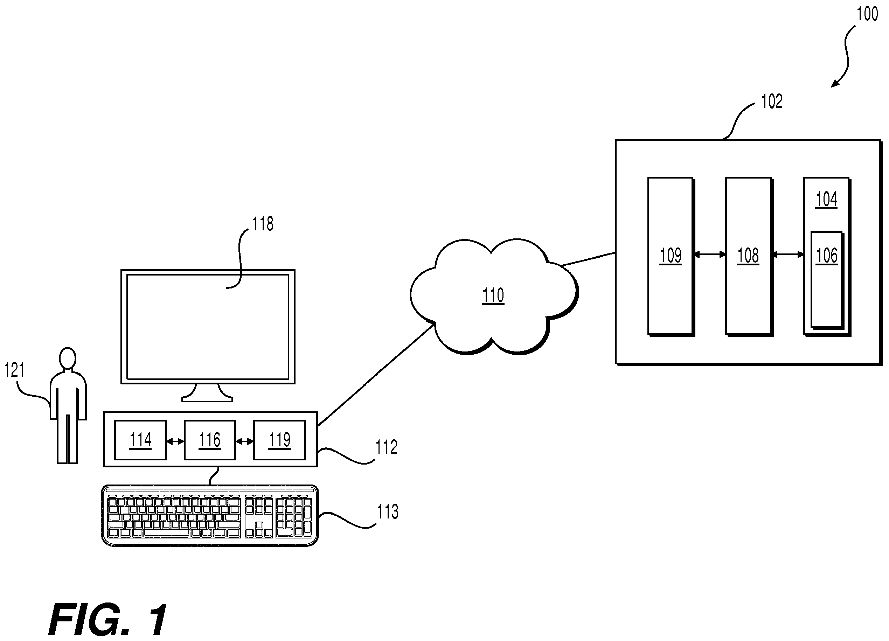

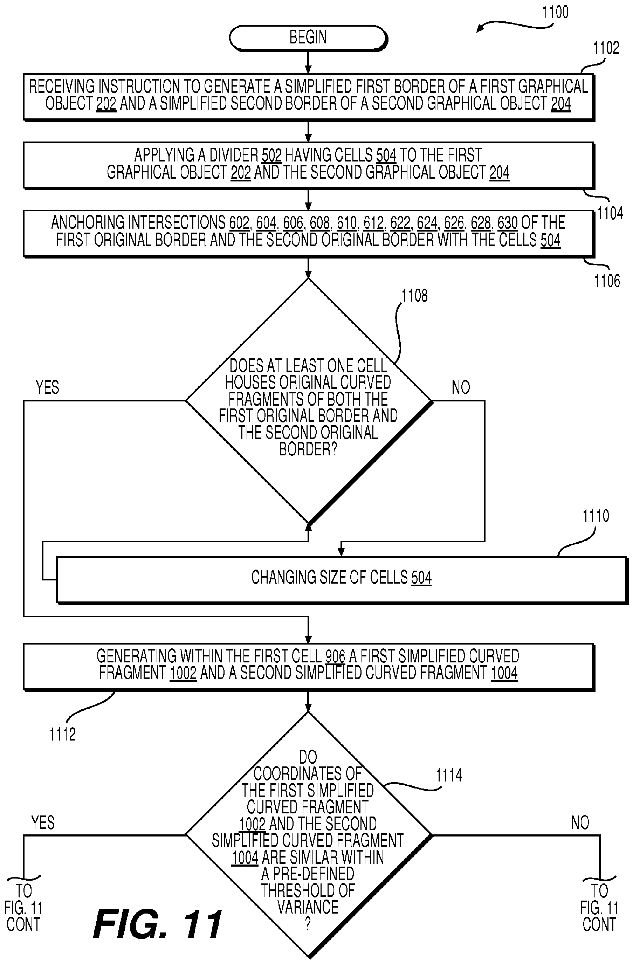

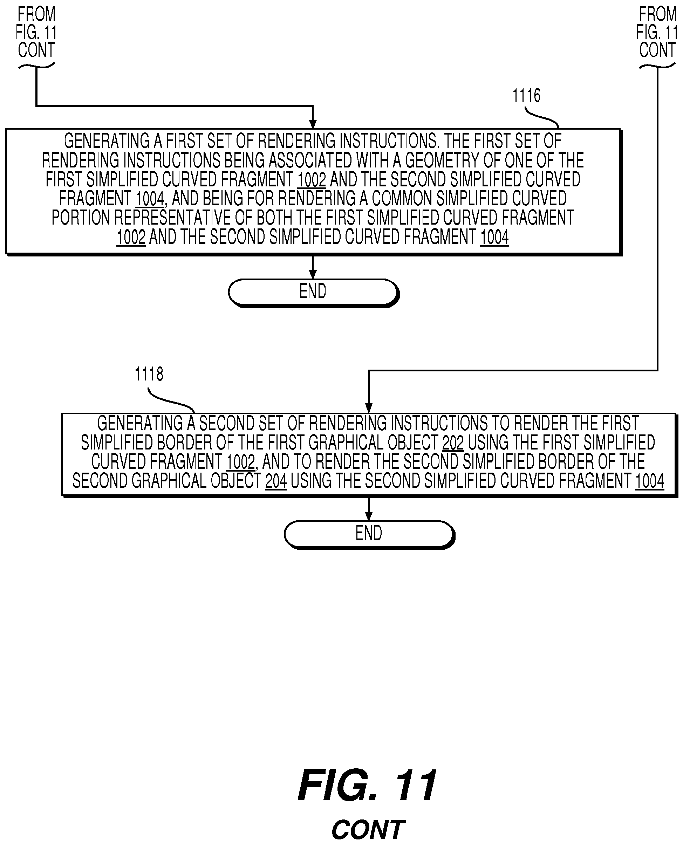

Fig. 11 depicts a block-diagram of a method executable within the system of Figure 1 and implemented in accordance with non-limiting embodiments of the present technology.

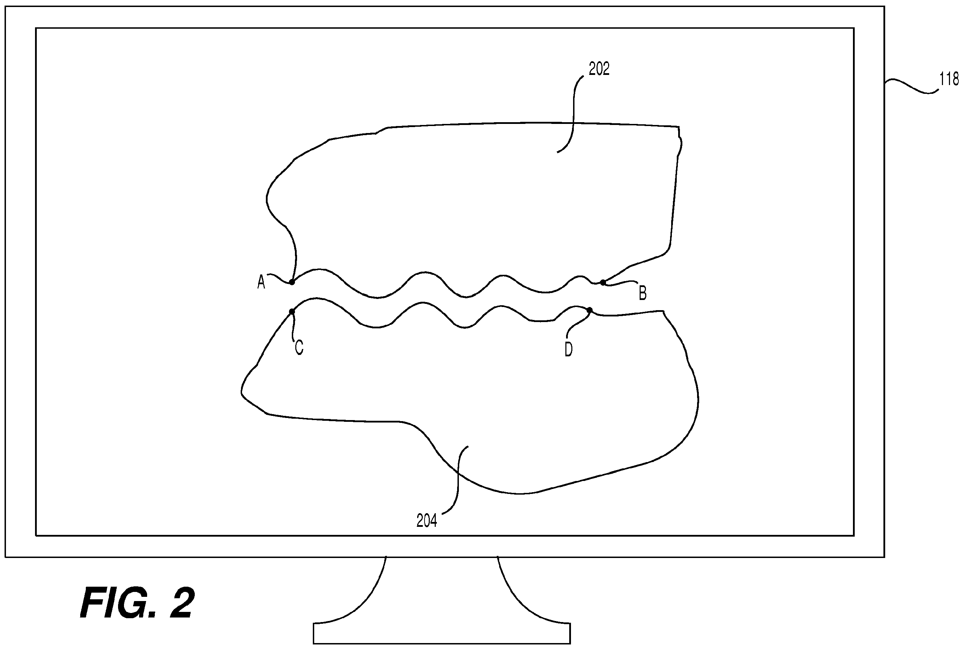

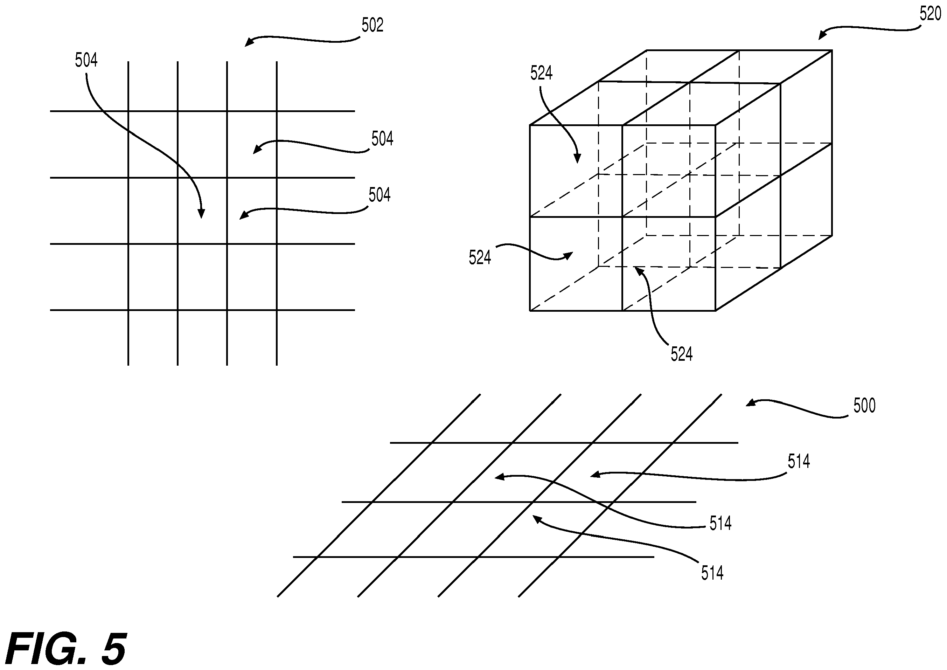

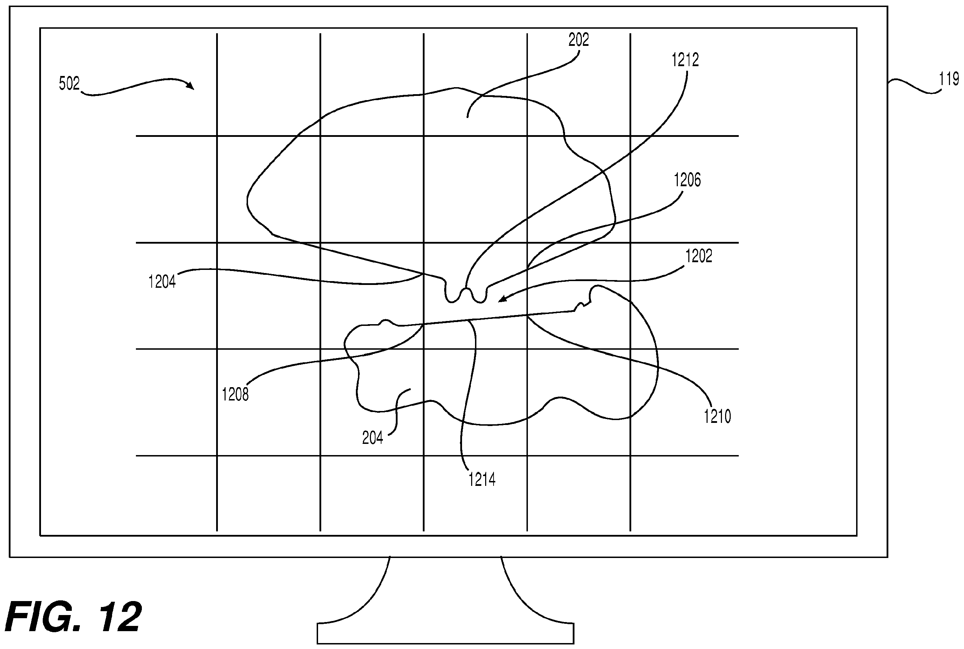

Fig. 12 depicts a non-limiting example of intersection of the first graphical object and the second graphical object of Fig. 2 with a divider of Fig. 5, where no one cell comprises original curved fragments of both the first original border and the second original border, all being implemented in accordance with non-limiting embodiments of the present technology.

### DETAILED DESCRIPTION

Referring to Figure 1, there is shown a diagram of a system 100, the system 100 being suitable for implementing non-limiting embodiments of the present technology. It is to be expressly understood that the system 100 is depicted as merely as an illustrative implementation of the present technology. Thus, the description thereof that follows is intended to be only a description of illustrative examples of the present technology. This description is not intended to define the scope or set forth the bounds of the present technology. In some cases, what are believed to be helpful examples of modifications to the system 100 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e. where no examples of modifications have been set forth), it should not be interpreted that no modifications are possible and/or that what is described is the sole manner of implementing that element of the present technology. As a person skilled in the art would understand, this is likely not the case. In addition it is to be understood that the system 100 may provide in certain instances simple implementations of the present technology, and that where such is the case they have been presented in this manner as an aid to understanding. As persons skilled in the art would understand, various implementations of the present technology may be of a greater complexity.

System 100 includes a server 102. The server 102 may be implemented as a conventional computer server. In an example of an embodiment of the present technology, the server 102 may be implemented as a Dell™ PowerEdge™ Server running the Microsoft™ Windows Server™ operating system. Needless to say, the server 102 may be implemented in any other suitable hardware and/or software and/or firmware or a combination thereof. In the depicted non-limiting embodiment of present technology, the server 102 is a single server. In alternative non-limiting embodiments of the present technology, the functionality of the server 102 may be distributed and may be implemented via multiple servers.

In some implementations of the present technology, the server 102 can be under control and/or management of a map service provider, for example, provider of Maps.Yandex^{™}. In alternative implementations the server 102 can access the map service provided by a third-party provider. In yet other implementations, the server 102 can be under control and/or management of provider of such services as computer game services, graphical design services, and other services related to computer graphics.

The server 102 includes an information storage medium 104 that may be used by the server 102. Generally, the information storage medium 104 may be implemented as a medium of any nature and kind whatsoever, including RAM, ROM, disks (CD-ROMs, DVDs, floppy disks, hard drivers, etc.), USB keys, solid state-drives, tape drives, etc. and also the combinations thereof.

The implementations of the server 102 are well known in the art. So, suffice it to state, that the server 102 comprises *inter alia* a network communication interface 109 (such as a modem, a network card and the like) for two-way communication over a communication network 110; and a processor 108 coupled to the network communication interface 109 and the information storage medium 104, the processor 108 being configured to execute various routines, including those described herein below. To that end the processor 108 may have access to computer readable instructions stored on the information storage medium 104, which instructions, when executed, cause the processor 108 to execute the various routines described herein.

In some non-limiting embodiments of the present technology, the communication network 110 can be implemented as the Internet. In other embodiments of the present technology, the communication network 110 can be implemented differently, such as any wide-area communication network, local-area communication network, a private communication network and so on.

The information storage medium 104 is configured to store data, including computer-readable instructions and other data, including graphical objects data of any kind. In some implementations of the present technology, the information storage medium 104 can store at least part of the data in a database 106. In other implementations of the present technology, the information storage medium 104 can store at least part of the data in any collections of data other than databases.

Data stored on the information storage medium 104 (and more particularly, at least in part, in some implementations, in the database 106) can comprise coordinates for rendering graphical objects of any kind. Non-limiting examples of graphical objects are depicted in Fig. 2, Fig. 6, and Fig. 7.

**Fig. 2** illustrates a non-limiting example of a first graphical object 202 and a second graphical object 204 which coordinates are stored on the information storage medium 104. The first graphical object 202 and the second graphical object 204 are depicted as they could be potentially shown on a display screen 118 of a client device 112, which display screen 118 and the client device 112 will be described below in more details. In this non-limiting implementation, the first graphical object 202 and the second graphical object 204 are two two-dimensional graphical objects. The first graphical object 202 and the second graphical object 204 have respectively a first original border (not numbered) and a second original border (not numbered). The first original border and the second original border are defined by their respective coordinates which define positions of points and lines in the two-dimensional space with respect to a system of axis (not depicted). The first original border and the second original border comprise curved lines only. However, it is not mandatory, and original borders of other two-dimensional objects can comprise both straight and curved lines. In some implementations (for example, in the cases where two-dimensional objects are raster images), respective original borders can fully or partially be formed by lines formed by pluralities of points.

The first graphical object 202 and the second graphical object 204 are located in close proximity. Close proximity can vary in different implementations of the present technology. Parameters of proximity can be set up by pre-defining maximal tolerated variance between coordinates of neighboring border portions of the first graphical object 202 and the second graphical object 204. Referring to Fig. 2, a part of the first original border (between points A and B) and a part of the second original border (between points C and D), one going along another, can be parts of original border portions being in close proximity, provided that discrepancy between their coordinates do not exceed predetermined values. Two graphical objects can have curving lines being in close proximity, for example, when these two objects are representing a plan of a park, where two parts of the park are separated by curved path. While the close proximity of two fragments of two two-dimensional objects can be detected by comparing two coordinates of two axis of X-axis and Y-axis system, the close proximity of two fragments of two three-dimensional objects can be detected by comparing three coordinates of three axis system (X, Y, Z axis).

The first original border and the second original border, being in this implementation the curved lines, can comprise plurality of vertexes, being in this implementation local extreme points of curvatures. The local extreme points of curvatures are present between points A and B, and also between points C and D (local extreme points of curvatures are not numbered).

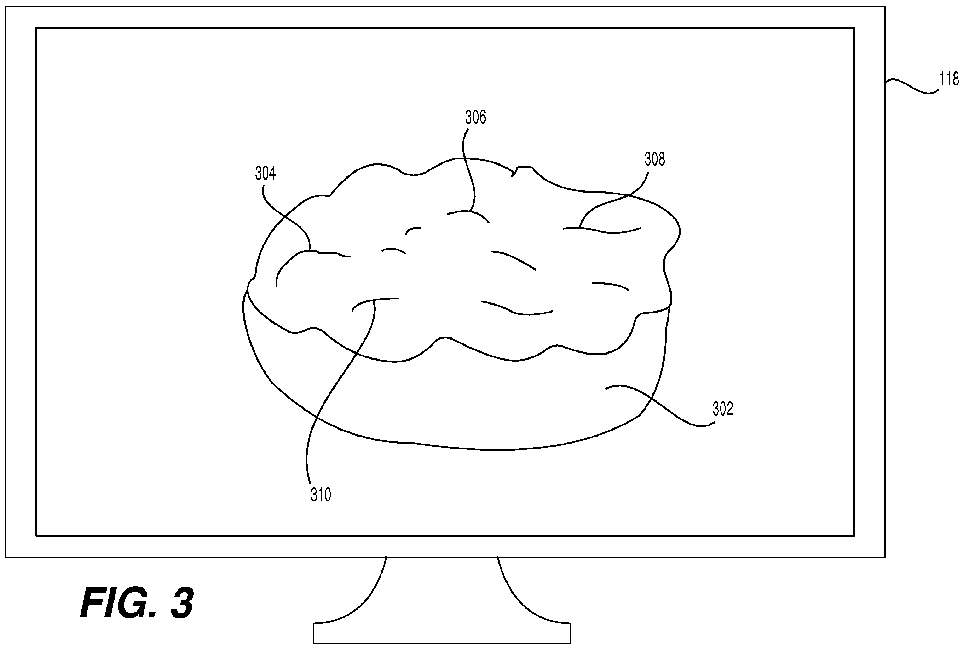

**Fig. 3** illustrates alternative non-limiting implementation of a first graphical object 302 which coordinates are stored on the information storage medium 104. The first graphical object 302 is depicted as it could be potentially shown on the display screen 118. In this non-limiting implementation, the first graphical object 302 is a three-dimensional graphical object.

The first graphical object 302 has a first original border (not numbered). The first original border is represented by curving surfaces of irregular geometric shape, and can be defined by coordinates which define positions of surfaces by references being numbers which determine the position of surfaces (or points or lines forming surfaces) in the three-dimensional space with respect to a system of axes (not depicted). The first original border comprises curving surfaces only. However, it is not mandatory, and borders of other three-dimensional objects can comprise other elements, such as plain surfaces, edges, and others.

The first original border can comprise plurality of vertexes being local extreme points of curvatures. For better understanding and for ease of perception, few of them are numbered 304, 306, 308, 310 in Fig. 3. As one can see, there are more vertexes on the border of the first graphical object 302 in Fig. 3 than the four enumerated within the depiction of Fig. 3.

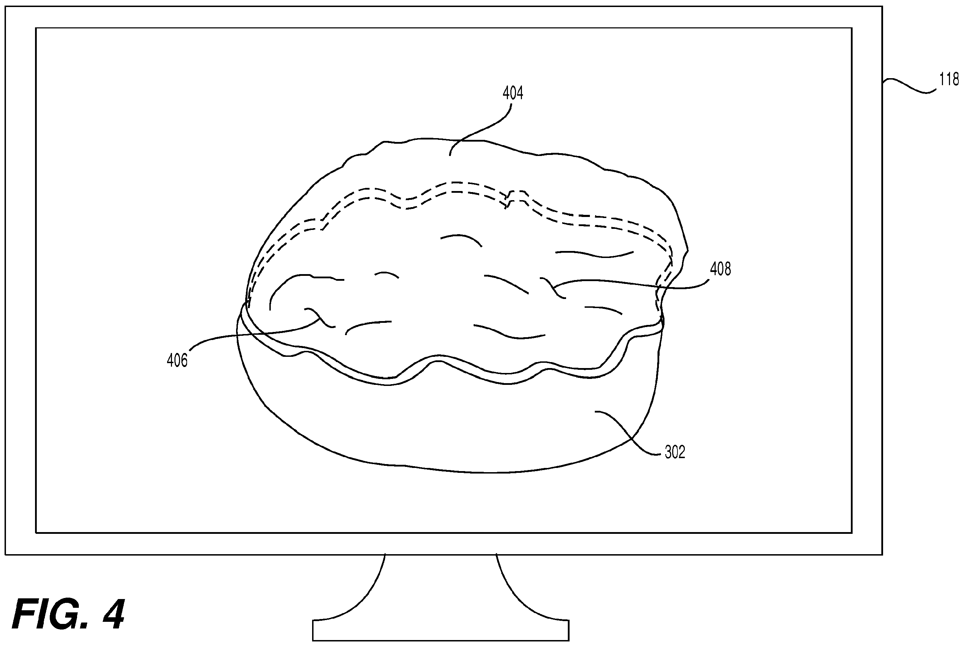

**Fig. 4** the first graphical object 302 of Fig. 3, and located nearby a second graphical object 404 which coordinates are stored on the information storage medium 104. The second graphical object 404 is depicted as it could be potentially shown on the display screen 118. In this non-limiting implementation, the second graphical object 404 is a three-dimensional graphical object.

The second graphical object 404 has a first original border (not numbered). The second original border is represented by curving surfaces of irregular geometric shape, and can be defined by coordinates which define positions of surfaces by references being numbers which determine the position of surfaces (or points or lines forming surfaces) in the three-dimensional space with respect to a system of axes (not depicted). The second original border comprises curved surfaces only. However, it is not mandatory, and borders of other three-dimensional objects can comprise other elements, such as plain surfaces, edges, and others.

The second original border can comprise plurality of vertexes being local extreme points of curvatures. For better understanding and for ease of perception, few of them are numbered 406, 408 in Fig. 4. As one can see, there are more vertexes on the border of the second graphical object 404 in Fig. 4 than the two enumerated within the depiction of Fig. 4.

The information storage medium 104 can store computer-readable instructions that manage control, updates, populating and modifications of the database 106 and/or other collections of data. More specifically, computer-readable instructions stored on the information storage medium 104 cause the server 102 to receive (to update) information in respect of graphical objects (for example, via the communication network 110), to store information in respect of the graphical objects, including the information in respect of their respective perimeters in the database 106, and/or in other collections of data.

The information storage medium 104 can store computer-readable instructions that, when executed, cause the processor 108 to apply a divider having cells to graphical objects. The divider is a tool to separate the space into fragments. There can be different dividers in different implementations of the present technology. For illustrative purposes, three dividers are depicted in **Fig. 5****.**

Dividers 502 and 510 are two-dimensional grids which can be used for dividing two-dimensional objects into fragments. A two-dimensional grid 502 has cells 504 being squares. A two-dimensional grid 510 has cells 514 being rhombus. However, many other two-dimensional dividers are possible, for example, those separating the space into parallelepipeds or triangles.

Divider 520 is a three-dimensional divider which can be used for dividing either two-dimensional objects, or three-dimensional objects into fragments. A three-dimensional divider 520 has cells 524 being cubes. However, many other three-dimensional dividers 520 are possible, for example, three-dimensional dividers 520 separating the space into oblique parallelepipeds.

All dividers 502, 510 and 520 can have cells of a predetermined size. However, in some implementations, computer-readable instructions being stored on information storage medium 104, when executed, can cause the processor 108 to change the size of cells from the predetermined size to larger or smaller size. The reason is that some graphical objects can comprise both curved borders and plain (straight) borders. It is possible that, because of scale of the first graphical object 202 and the second graphical object 204 and because of scale of the divider 502 no original curved fragments will be obtained, as it depicted in Fig. 12. In such a situation, the size of cells 504 can be changed such that at least some original fragments of the first original border being original curved fragments and at least some original fragments of the first original border being original curved fragments are obtained within a cell.

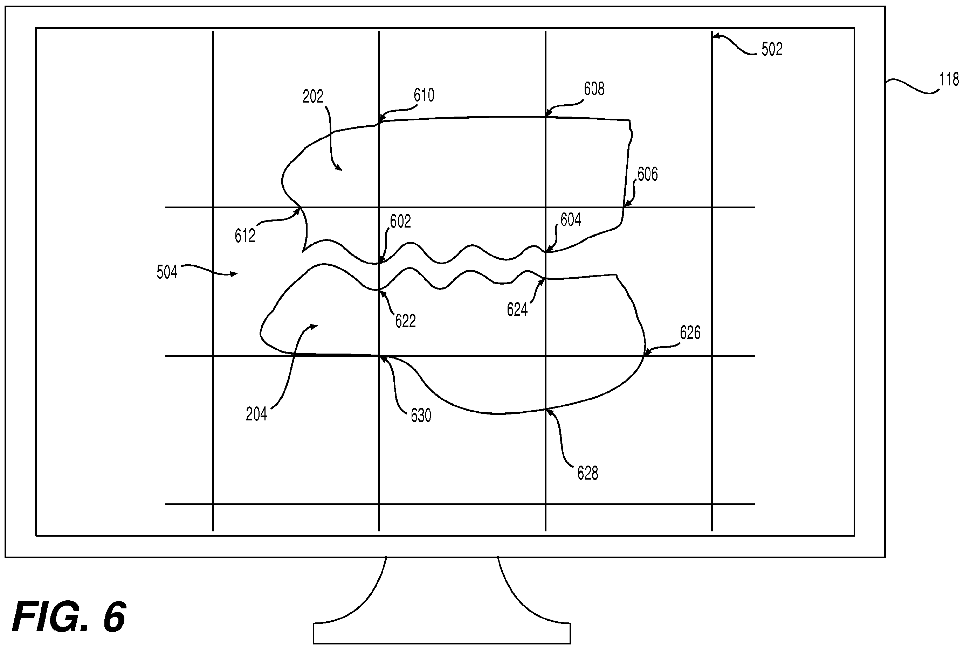

The computer-readable instructions can cause the processor 108 to apply the two-dimensional gid 502 to the first graphical object 202 and the second graphical object 204 such that the first original border is split into a plurality of original fragments of the first original border in points 602, 604, 606, 608, 610, and 612, and the second original border is split into a plurality of original fragments of the second original border in points 622, 624, 626, 628, and 630, and such that at least some original fragments of the first original border are original curved fragments, and at least some original fragment of the second original border are original curved fragments. In Fig. 6, the original fragment between points 602 and 604 of the first original border is original curved fragment. The original fragment between points 620 and 622 of the second original border is original curved fragment, too.

Example demonstrating applying the two-dimensional grid 502 is intended for illustrative purposes only. Similarly, as it was described above, the computer-readable instructions can cause the processor 108 to apply the two-dimensional grid 504 to two-dimensional objects 202, 204, or to any other two-dimensional objects.

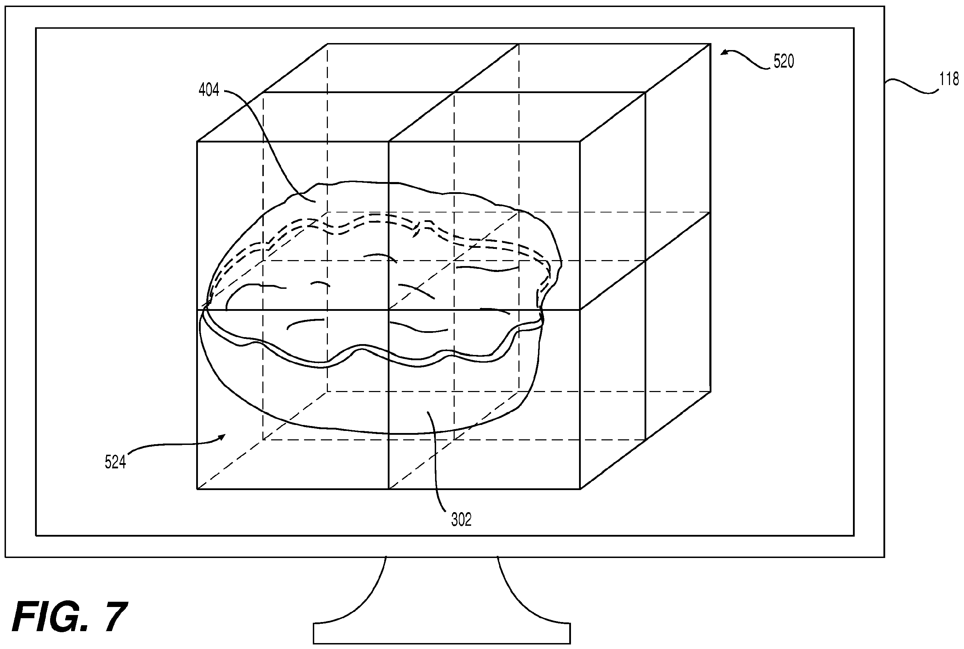

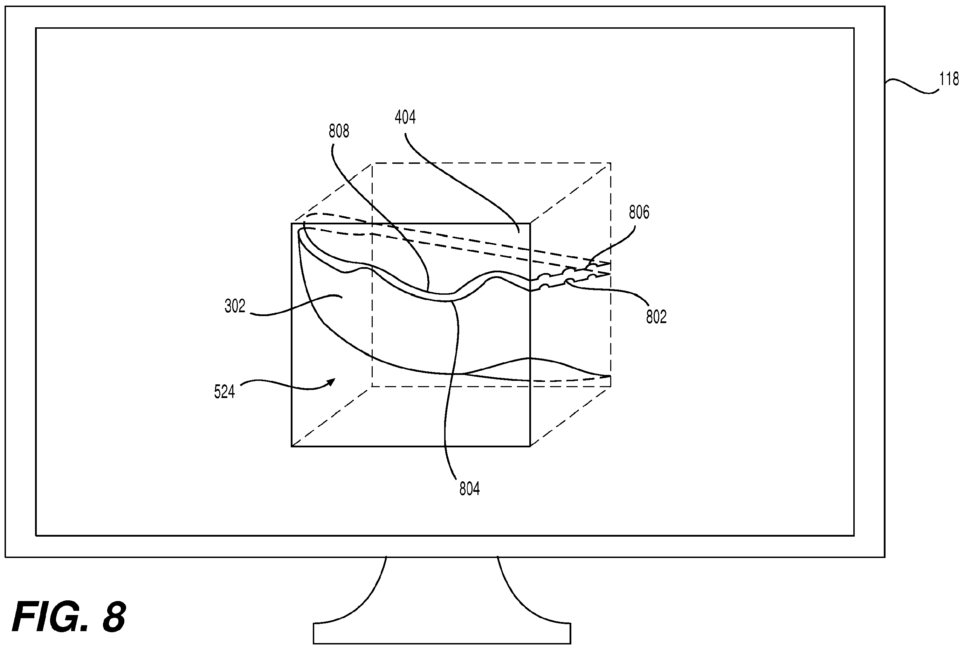

Furthermore, in the same way, the tree-dimensional divider 520 can be applied to two-dimensional objects 202, 204 or to three-dimensional objects 302, 404. For example, Fig. 7 illustrates applying three-dimensional divider 520 to the first graphical object 302 and the second graphical object 404 such that the first original border is split into a plurality of original fragments of the first original border and original fragments of the second original border in intersecting lines (not depicted in Fig. 7), where original borders, being surfaces, are intersected by imaginary cube sides (sides of cells 524), also being surfaces. Fig. 8 illustrates the left bottom cell 524 of Fig. 7 That cell hosts original fragments of the first original border being original curved fragments 802, 804 and original fragments of the second original border being original curved fragments 806, 808. Curved fragments 802 and 806 are fragments created by separation by the right-side vertical side of the cell 524. Curved fragments 804 and 808 are fragments created by separation by the upper horizontal side of the cell 524.

It is possible that, because of scale of the first graphical object 202 (302) and the second graphical object 204 (404) and because of scale of the divider 502 (520) no original curved fragments will be obtained, as it is depicted in Fig. 12 with respect to two-dimensional figures 202 and 204. In such a situation, the size of cells 504 (524) can be changed such that at least some original fragments of the first original border being original curved fragments and at least some original fragments of the first original border being original curved fragments are obtained.

The information storage medium 104 can store computer-readable instructions that, when executed, cause the processor 108 to anchor intersections of the first original border and the second original border with the cells. Referring to Fig. 3, computer-readable instructions can cause the processor 108 to anchor intersections 602, 604, 606, 608, 610, 612, 622, 624, 626, 628, 630 of the first original border and the second original border with the cells 504. Referring to Fig. 7 and Fig. 8, computer-readable instructions can cause the processor 108 to anchor intersections 802, 804, 806, 808 and other not depicted in Fig. 8 intersections of the first original border and the second original border with the cells 524, in addition to intersections 802, 804, 806, 808.

The information storage medium 104 can store computer-readable instructions that, when executed, cause the processor 108 to determine whether at least one cell 504 (514, 524) houses original curved fragments of both the first original border and the second original border.

Fig. 8 depicts a non-limiting example of left bottom cell 524 of the three dimensional divider 520 of Fig. 7, the left bottom cell 524 comprising original fragments of the first graphical object 302 and of the second graphical object 404. The cell 524 houses original curved fragments of both the first original border and the second original border. Original curved fragments of both the first original border and the second original border, being curved surfaces, face each other.

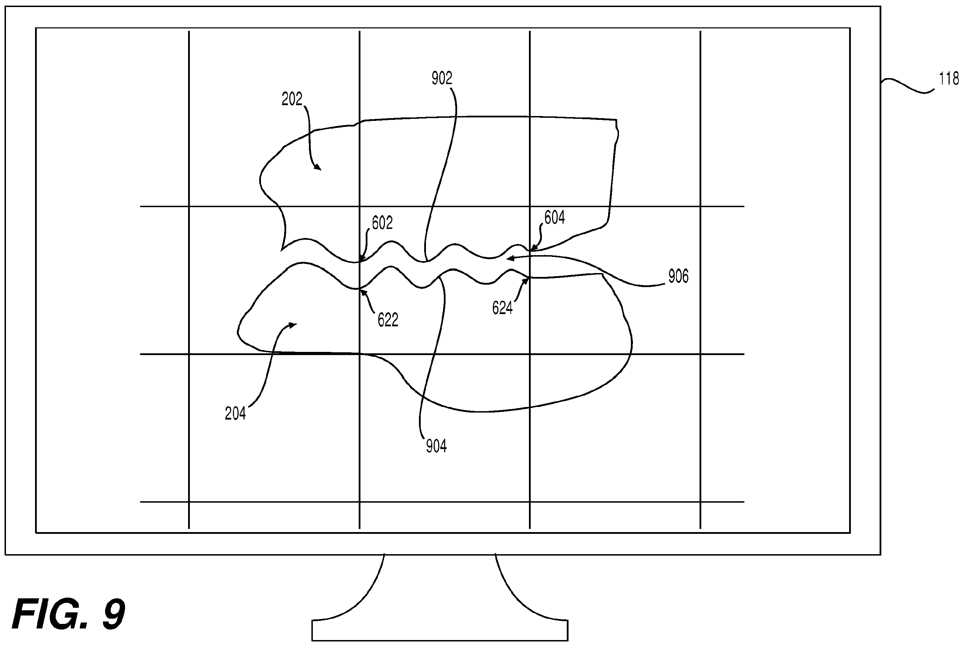

Referring to Fig. 9, a first cell 906 houses a first original curved fragment 902 of the first original border, being a curved line between points 602 and 604, and houses a second original curved fragment 904 of the second original border, being a curved line between points 622 and 624. The first original curved fragment 902 comprises sections (not numbered) being consecutively connecting plurality of vertexes (not numbered) of the first original curved fragment 902. Similarly, the second original curved fragment 904 comprises sections (not numbered) being consecutively connecting plurality of vertexes (not numbered) of the second original curved fragment 904.

The information storage medium 104 can store computer-readable instructions that, when executed, cause the processor 108, responsive to the first cell 906 housing the first original curved fragment 902 of the first original border and the second original curved fragment 904 of the second original border, to generate within the first cell 906 a first simplified curved fragment 1002 and a second simplified curved fragment 1004, both the first simplified curved fragment 1002 and the second simplified curved fragment 1004 being depicted as dotted lines in Fig. 10, by applying a simplification rule respectively to the first original curved fragment 902 and to the second original curved fragment 904, while keeping positions of anchored intersections 602, 604, 622, 624 unchanged.

In some implementations, as in that depicted in Fig. 10, where an original curved fragment (like fragment 902 or 904) comprises sections that consecutively connect a plurality of vertexes of that original curved fragment, the simplification rule can comprise reducing number of vertexes of that original curved fragment.

In some implementations of the present technology, the simplification rule comprises reducing number of vertexes of the first original curved fragment 902 and of the second original curved fragment 904, as can be seen in Fig. 10, if one compares the first original curved fragment 902 and the first simplified curved fragment 1002, and if one compares the second original curved fragment 904 and the second simplified curved fragment 1004.

Reducing number of vertexes is one of many possible methods of simplification rules. as a non-limiting example, simplification rule can comprise straightening sections consecutively connecting plurality of vertexes.

The information storage medium 104 can store computer-readable instructions that, when executed, cause the processor 108 to determine whether coordinates of the first simplified curved fragment 1002 and the second simplified curved fragment 1004 are similar within a pre-defined threshold of variance. The pre-defined threshold of variance can be predetermined in terms of any suitable measuring system. For example, the pre-defined threshold of variance can be expressed in pixels (for example, 2 pixels), or in millimeters, etc. Determining whether coordinates of the first simplified curved fragment 1002 and the second simplified curved fragment 1004 are similar within a pre-defined threshold of variance can be performed by comparing coordinates of the first simplified curved fragment 1002 and the second simplified curved fragment 1004.

In some implementations, determining whether coordinates of the first simplified curved fragment 1002 and the second simplified curved fragment 1004 are similar within the pre-defined threshold of variance can be performed by establishing, that coordinates of the first simplified curved fragment and coordinates of the second simplified curved fragment are the same.

In some implementations, determining whether coordinates of the first simplified curved fragment 1002 and the second simplified curved fragment 1004 are similar within the pre-defined threshold of variance can be performed by establishing, that discrepancy between coordinates of the first simplified curved fragment and coordinates of the second simplified curved fragment are within a predetermined maximal threshold.

The information storage medium 104 can store computer-readable instructions that, when executed, cause the processor 108, responsive to the first simplified curved fragment 1002 and the second simplified curved fragment 1004 being similar within the pre-defined threshold of variance, to generate a first set of rendering instructions, the first set of rendering instructions being associated with a geometry of either the first simplified curved fragment 1002 or the second simplified curved fragment 1004, and being for rendering a common simplified curved portion representative of both the first simplified curved fragment 1002 and the second simplified curved fragment 1004. In other words, the processor 108 can generate the first set of rendering instructions to render one graphical element which can be used for rendering not only the first simplified object, but also for rendering the second simplified object. The first set of rendering instructions can be generated taken into account one of two simplified curved fragments: the first simplified curved fragment 1002 or the second simplified curved fragment 1004, since they are similar.

In some implementations, the first set of rendering instructions further comprises instructions to use, after rendering the common simplified curved portion representative of both the first simplified curved fragment 1002 and the second simplified curved fragment 1004, so rendered the common simplified curved portion as two identical border portions to complete a first portion 1006 of the first simplified border and to complete a second portion 1008 of the second simplified border. The first portion 1006 is a remaining part of the first simplified border, and the second portion 1008 is a remaining part of the second simplified border. For sake of simplicity, the first portion 1006 of the first simplified border and the second portion 1008 of the second simplified border are depicted as being identical corresponding fragments of original first border and the second border. However, the first portion 1006 of the first simplified border and the second portion 1008 of the second simplified border in many implementations of the present technology will deviate from corresponding fragments of original first border and the second border.

The first set of rendering instructions can comprise instruction to render the first portion 1006 (depicted in Fig. 9) of the first simplified border of the first graphical object 202 and the second portion 1008 (also depicted in Fig. 9) of the second simplified border of the second graphical object 204, the first portion 1006 and the second portion 1008 respectively excluding the first simplified curved fragment 1002 and the second simplified curved fragment 1004. Thus, the first set of rendering instructions can comprise instruction to render remaining portions of the first simplified border and the second simplified border.

The information storage medium 104 can store computer-readable instructions that, when executed, cause the processor 108, when the first simplified curved fragment and the second simplified curved fragment are distinctive, to generate a second set of rendering instructions to render the first simplified border of the first graphical object using the first simplified curved fragment, and to render the second simplified border of the second graphical object using the second simplified curved fragment. The first simplified curved fragment and the second simplified curved fragment are distinctive if they are not are similar within a pre-defined threshold of variance. For example, if the first simplified curved fragment and the second simplified curved fragment would have shapes similar to line from point 602 to 612, and from point 622 to point 630 of Fig. 6, they would be distinctive, even despite the fact that they both are located within the same cell 504.

In other words, when the first simplified curved fragment and the second simplified curved fragment are distinctive, two graphical lines will be generated, which two lines can be used for rendering the first simplified object and the second simplified object.

The information storage medium 104 can store computer-readable instructions that, when executed, cause the processor 108 to receive from a client device 112, a user 121 request for rendering instructions for rendering the first simplified border of the first graphical object and the second simplified border of the second graphical object. The request for rendering instructions can be received via the communication network 110. The request for rendering instructions for rendering simplified borders of graphical objects can be generated by the client device 112, for example, responsive to the user 121 zooms out while watching a map in a web browser being installed on the client device 112. The client device 112 will be described in more details below.

The information storage medium 104 can store computer-readable instructions that, when executed, cause the processor 108 to send the first set of rendering instructions to the client device 112 via the communication network 110.

The system 100 further comprises a client device 112. The client device 112 is typically associated with a user 121. The client device 112 is a kind of a computing device. It should be noted that the fact that the client device 112 is associated with the user does not need to suggest or imply any mode of operation - such as a need to log in, a need to be registered or the like.

As depicted in Fig. 1 the client device 112 can be implemented as Dell^{™} Precision T1700 MT CA033PT170011RUWS PC with Intel® Xeon™ processor 128, CPU frequency 3300 MHz, video card nVIDIA Quadro K2000 (not numbered), running the Windows 7® Pro 64-bit operating system, the operating system installed and active. The client device 112 comprises *inter alia* a network communication interface 119 (such as a modem, a network card and the like) for two-way communication over a communication network 110. As those skilled in the art will understand, the implementation of the client device 112 is not particularly limited. The client device 112 may be implemented as a personal computer (desktops, laptops, netbooks, etc.), a wireless communication device (a cell phone, a smartphone, a tablet and the like), as well as other equipment.

The client device 112 comprises a user input device 113. How the user input device 113 is implemented is not particularly limited and may depend on how the client device 112 is implemented. The user input device 113 may include any mechanism for providing user input to the processor 116. The user input device 113 can be a keyboard, and/or a mouse, and so on. The input device 113 is not limited to any specific input methodology, but could be arranged by a virtual button on a touch-screen display or a physical button on the cover of the electronic device, for instance.

Merely as an example and not as a limitation, in those embodiments of the present technology where the client device 112 is implemented as a wireless communication device (such as a smartphone), user input device 113 can be implemented as an optical interference based user input device. The user input device 113 of one example is a finger/object movement sensing device on which a user performs a gesture and/or presses with a finger. The user input device 113 can identify/track the gesture and/or determines a location of a user's finger on the user input device 113. In the instances where the user input device 113 is executed as the optical interference based user input device, such as touch screen, or multi-touch display, the user input device 113 can further execute functions of the display screen 118.

The user input device 113 is communicatively coupled to a processor 116 and transmits input signals (and output signals where it also operates as the display screen 118) based on various forms of user input for processing and analysis by processor 116.

The client device 112 further comprises an information storage medium 114, also referred to as the local memory 114. Local memory 114 can comprise any type of media, including but not limited to RAM, ROM, disks (CD-ROMs, DVDs, floppy disks, hard drivers, etc.), USB keys, solid state-drives, tape drives, etc. Generally speaking, the purpose of the local memory 114 is to store computer readable instructions as well as any other data.

The client device 112 further comprises the display screen 118. Display screen 118 can be liquid crystal display (LCD), light emitting diode (LED), Interferometric modulator display (IMOD), or any other suitable display technology. The display screen 118 is generally configured to display a graphical user interface (GUI) that provides an easy to use visual interface between the user 121 of the client device 112 and the operating system or application(s) running on the client device 112. Generally, the GUI presents programs, files and operational options with graphical images. Display screen 118 is also generally configured to display other information like user data and web resources. Display screen 118 can also be touch based devices such as touch screen. A touch screen is a display that detects the presence and location of user touch inputs. Display screen 118 can also be dual touch or multi-touch displays that can identify the presence, location and movement of a touch inputs. In the instances where the display screen 118 is implemented as a touch based device such as touch screen, or multi-touch display, the display screen 118 can execute functions of the user input device 113.

The display screen 118 is communicatively coupled to processor 116 and receives signals from the processor 116. In instances where display screen 118 is implemented as a touch based device such as touch screen, or multi-touch display, the display screen 118 can also transmit input signals based on various forms of user input for processing and analysis by processor 116.

The client device 112 further comprises the above mentioned processor 116. The processor 116 is configured to perform various operations in accordance with a machine-readable program code. The processor 116 is operatively coupled to the user input device 113, to the local memory 114, and to the display screen 118. The processor 116 is configured to have access to computer readable instructions which instructions, when executed, cause the processor to execute the various routines. As non-limiting examples, the processor 116 described herein can have access to computer readable instructions, which instructions, when executed, can cause the processor 116 to: display information on the display screen 118; receive from a user 121 of the client device 112 via the user input device 113 a request to render simplified graphical objects; send, by the client device 112 to a server 102 via a communication network 110, the request for rendering instructions for rendering the first simplified border of the first graphical object 202 (302) and the second simplified border of the second graphical object 204 (404); receive by the client device 112 from the server 102 sets of rendering instructions and other data; display on the display screen 118 a original graphical objects and simplified graphical objects.

The local memory 114 is configured to store data, including computer-readable instructions and other data, including graphical objects data of any kind. In some implementations of the present technology, the local memory 114 can store at least part of the data in a database (not depicted). In other implementations of the present technology, the local memory 114 can store at least part of the data in any collections of data other than databases.

Data stored on the local memory 114 (and more particularly, at least in part, in some implementations, in the database) can comprise graphical objects of any kind. Non-limiting examples of graphical objects are depicted in Fig. 2, Fig. 3 and Fig. 4. The graphical objects depicted in Fig. 2, Fig. 3 and Fig. 4 are described in more details above.

The local memory 114 can store computer-readable instructions that manage control, updates, populating and modifications of the database and/or other collections of data. More specifically, computer-readable instructions stored on the local memory 114 allow the client device 112 to receive (to update) information in respect of graphical objects (for example, from input device 113, or via the communication network 110, and so on), to store information in respect of the graphical objects, including the information in respect of their respective perimeters in the database, and/or in other collections of data.

Computer-readable instructions, stored on the local memory 114, when executed, can cause the processor 116 to perform same functions, as computer readable instructions, stored on the computer readable storage medium 104 of the server 102.

Computer-readable instructions, stored on the local memory 114, when executed, can further cause the processor 116 to render the at least part of the simplified first border and the at least part of the simplified second border on a display screen 118. In some implementations, rendering the at least part of the simplified first border and the at least part of the simplified second border on the display screen 118 is rendering scaled visual presentation of the at least part of the simplified first border and the at least part of the simplified second border. Rendering the at least part of the simplified first border and the at least part of the simplified second border can be the result of either receiving corresponding instructions from the server 102, or the result of processing original borders by the processor 116.

The client device 112 comprises *inter alia* a network communication interface 109 (such as a modem, a network card and the like) for two-way connection with the communication network 110. The client device 112 is coupled to the communication network 110, using the network communication interface 109, via a communication link (not numbered). In some non-limiting embodiments of the present technology, the communication network 110 can be implemented as the Internet. In other embodiments of the present technology, the communication network 110 can be implemented differently, such as any wide-area communications network, local-area communications network, a private communications network and the like. The client device 112 can establish connections, through the communication network 110, with other devices, such as servers. More particularly, the client device 112 can establish connections and interact with the server 102.

How the communication link is implemented is not particularly limited and will depend on how the client device 112 is implemented. Merely as an example and not as a limitation, in those embodiments of the present technology where the client device 112 is implemented as a wireless communication device (such as a smartphone), the communication link can be implemented as a wireless communication link (such as but not limited to, a 3G communications network link, a 4G communications network link, a Wireless Fidelity, or WiFi® for short, Bluetooth® and the like). In those examples, where the client device 112 is implemented as a notebook computer, the communication link can be either wireless (such as the Wireless Fidelity, or WiFi® for short, Bluetooth® or the like) or wired (such as an Ethernet based connection).

It should be expressly understood that implementations for the client device 112, the communication link and the communication network 110 are provided for illustration purposes only. As such, those skilled in the art will easily appreciate other specific implementation details for the client device 112, the communication link and the communication network 110. As such, by no means, examples provided herein above are meant to limit the scope of the present technology.

Fig. 11 illustrates a computer-implemented method 1100 of generating a first simplified border of a first graphical object 202 and a second simplified border of a second graphical object 204, the first graphical object 202 and the second graphical object 204 having respectively a first original border and a second original border, the first original border and the second original border comprising curved border portions 902, 904 being located in a close proximity, the method executable on a server 102.

### Step 1102 - receiving instruction to generate a simplified first border of a first graphical object 202 and a simplified second border of a second graphical object 204

The method 1100 starts at step 1102, where the server 102 receives, from the client device 112 via communication network 110, a request for rendering instructions for rendering the first simplified border of the first graphical object 202 and the second simplified border of the second graphical object 204.

The request for rendering instructions for rendering the first simplified border of the first graphical object 202 and the second simplified border of the second graphical object 204 can be generated by the client device 112, for example, responsive to the user 121 zooms out while watching a map in a web browser being installed on the client device 112.

Then, the method 1100 proceeds to the step 1104.

### Step 1104 - applying a divider 502 having cells 504 to the first graphical object 202 and the second graphical object 204

Next, at step 1104, the processor 108 applies the two-dimensional grid 502 having cells 504 to the first graphical object 202 and the second graphical object 204 such that the first original border is split into a plurality of original fragments of the first original border, at least some original fragments of the first original border being original curved fragments, and the second original border is split into a plurality of original fragments of the second original border, at least some original fragment of the second original border being original curved fragments.

For example, referring to Fig. 4, the first graphical object 202 will be split into a plurality of original fragments connecting points 602, 604, 606, 608, 610, and 612. The second graphical object 204 will be split into a plurality of original fragments connecting points 622, 624, 626, 628, and 630.

All the fragments, depicted in Fig. 4, are curved fragments. In other implementations, some fragments can be curved fragments, and some fragments can be straight lines. The fragment can be straight line if the two-dimensional grid 502 divides a two-dimensional object having both curved and straight lines, and some cells 504 comprise fragments of a straight line.

Then, the method 1100 proceeds to the step 1106.

### Step 1106 - anchoring intersections 602, 604, 606, 608, 610, 612, 622, 624, 626, 628, 630 of the first original border and the second original border with the cells 504

Next, at step 1106, the processor 108 anchors intersections 602, 604, 606, 608, 610, 612, 622, 624, 626, 628, 630 of the first original border and the second original border with the cells 504. As a result, they become fixed and they will not move during the process of simplification of borders.

Then, the method 1100 proceeds to the step 1108.

### 1108 - determining whether at least one cell 504 houses original curved fragments of both the first original border and the second original border

It is possible that the first graphical object 202 and the second graphical object 204 have border portions comprising both straight and curved parts. Thus, when the two-dimensional grid 502 is applied, it can happen that there are no cells 504 housing original curved fragments of both the first original border and the second original border. For example, referring to Fig. 12, the first graphical object 202 and the second graphical object 204 have border portions comprising both straight and curved parts. There are three cells 504 (not numbered in fig. 12) comprising fragments of both the first original border and the second original border. Referring to one of these cells 502, being numbered 1202 in Fig. 12, one can see that it houses original curved fragment 1212 of the first original border (between points 1204 and 1206), and original straight fragment 1214 of the second original border (between points 1208 and 1210). Similarly, cells 504 located to the left and to the right of cell 1202 also comprise straight and curved fragments of original borders. There is no cell 504 in Fig. 12 which would host original curved fragments of both the first original border and the second original border.

At step 1108, the processor 108 determines whether at least one cell 504 houses original curved fragments of both the first original border and the second original border. Responsive to at least one cell 504 houses original curved fragments of both the first original border and the second original border, the method 1100 proceeds to the step 1112. Responsive to no one cell 504 houses original curved fragments of both the first original border and the second original border, the method 1100 proceeds to the step 1112.

It should be noted, that in some implementations, a minimal number of cells 504 housing original curved fragments of both the first original border 202 and the second original border 204 is predetermined. In those implementations, the processor 108 determines whether the minimal number of cells 504 houses original curved fragments of both the first original border and the second original border.

### Step 1110 - changing a size of cells

At step 1110, responsive to no one cell 504 houses original curved fragments of both the first original border and the second original border, the processor 108 changes size of cells 504 in order to at least one cell 504 houses original curved fragments of both the first original border and the second original border reaches the predetermined number.

In alternative implementation, responsive to no one cell 504 houses original curved fragments of both the first original border and the second original border, the processor 108 changes size of cells 504 in order to a number of 504 housing original curved fragments of both the first original border and the second original border reaches the predetermined number

For example, referring to Fig. 12, increase of cell 504 size can lead to the situation where at least one cell 504 houses original curved fragments of both the first original border and the second original border. As another example, lessening of cells 502 size can cause displacement of cell borders, which also can lead to the situation where at least one cell 504 houses original curved fragments of both the first original border and the second original border.

Once the step 1110 has been performed, the method 1100 proceeds back to the step 1108, described above. Steps 1110 and 1108 will alternate until a number of cells housing original curved fragments of both the first original border and the second original border reaches the predetermined number, which is one cell, in this implementation.

### Step 1112 - generating within the first cell 906 of Fig. 9 and Fig. 10 a first simplified curved fragment 1002 and a second simplified curved fragment 1004

At step 1112, the processor 108, responsive to a first cell 906 of Fig. 9 housing a first original curved fragment 902 of the first original border and a second original curved fragment 904 of the second original border, generates within the first cell 906 a first simplified curved fragment 1002 and a second simplified curved fragment 1004, both depicted in Fig. 10, by applying a simplification rule respectively to the first original curved fragment 902 and to the second original curved fragment 904, while keeping positions of anchored intersections 602, 604, 622, and 624 unchanged. In this implementation, the simplification rule comprises reducing number of vertexes of the first original curved fragment 902 and of the second original curved fragment 904, as it is depicted in Fig. 10.

It should be noted that in some implementations generating the simplified borders of the first graphical object 202 and the simplified borders of the second graphical object 204 further comprises applying the simplification rule to all or some original curving fragments of both the first graphical object 202 and the second graphical object 204, irrespective of in which cells 504 those lines are located.

Then, the method 1100 proceeds to the step 1114.

### Step 1114 - determining whether coordinates of the first simplified curved fragment and the second simplified curved fragment are similar within a pre-defined threshold of variance

Next, at step 1104, the processor 108 determines whether coordinates of the first simplified curved fragment 1002 and the second simplified curved fragment 1004 are similar within a pre-defined threshold of variance by establishing that discrepancy between coordinates of the first simplified curved fragment 1002 and coordinates of the second simplified curved fragment 1004 is within a predetermined maximal threshold. For example, for two-dimensional objects which coordinates are expressed in X-axis and Y-axis system, difference between coordinates of the first simplified curved fragment 1002 and coordinates of the second simplified curved fragment 1004 can be evaluated by analysing difference of the X-axis values and Y-axis values.

If difference of the X-axis values and Y-axis values is within the predetermined maximal threshold, the first simplified curved fragment 1002 and the second simplified curved fragment 1004 are similar, and the method 1100 proceeds then to step 1116.

If difference of the X-axis values and Y-axis values is outside of the predetermined maximal threshold along whole duration of two lines, or if they are outside of the predetermined maximal threshold in some points, the first simplified curved fragment 1002 and the second simplified curved fragment 1004 are distinctive, and the method 1100 proceeds then to step 1118.

### Step 1116 - generating a first set of rendering instructions, the first set of rendering instructions being associated with a geometry of one of the first simplified curved fragment 1002 and the second simplified curved fragment 1004, and being for rendering a common simplified curved portion representative of both the first simplified curved fragment 1002 and the second simplified curved fragment 1004

At step 1116, responsive to the first simplified curved fragment 1002 and the second simplified curved fragment 1004 being similar within the pre-defined threshold of variance, the processor 108 generates the first set of rendering instructions, the first set of rendering instructions being associated with a geometry of either the first simplified curved fragment 1002 or the second simplified curved fragment 1004, and being for rendering a common simplified curved portion representative of both the first simplified curved fragment 1002 and the second simplified curved fragment 1004. In other words, the processor 108 generates the first set of rendering instructions to render one graphical element which can be used for rendering not only the first simplified object, but also for rendering the second simplified object. The first set of rendering instructions can be generated taken into account one of two simplified curved fragments: the first simplified curved fragment 1002 or the second simplified curved fragment 1004, since they are similar.

In this implementation, the first set of rendering instructions further comprises instructions to use, after rendering the common simplified curved portion representative of both the first simplified curved fragment 1002 and the second simplified curved fragment 1004, so rendered the common simplified curved portion as two identical border portions to complete the first portion 1006 of the first simplified border (the remaining part of the first simplified border) and to complete the second portion 1008 of the second simplified border (the remaining part of the second simplified border).

In this implementation, the first set of rendering instructions further comprises instruction to render the first portion 1006 of the first simplified border of the first graphical object 202 and the second portion 1008 of the second simplified border of the second graphical object 204, the first portion 1006 and the second portion 1008 respectively excluding the first simplified curved fragment 1002 and the second simplified curved fragment 1004.

The server 102 then sends the first set of rendering instructions to the client device 112 which can render the first simplified graphical object and the second simplified graphical object on the display screen 118.

Alternatively, responsive to the first simplified curved fragment 1002 and the second simplified curved fragment 1004 being distinctive, the method 1100 proceeds to step 1118.

### Step 1118 - generating a second set of rendering instructions to render the first simplified border of the first graphical object 202 using the first simplified curved fragment 1002, and to render the second simplified border of the second graphical object 204 using the second simplified curved fragment 1004

At step 1118, responsive to the first simplified curved fragment 1002 and the second simplified curved fragment 1004 being distinctive, the processor 108 generates a second set of rendering instructions to render the first simplified border of the first graphical object 202 using the first simplified curved fragment 1002, and to render the second simplified border of the second graphical object 204 using the second simplified curved fragment 1004.

In this implementation, the second set of rendering instructions further comprises instructions to use, after rendering the first simplified curved fragment 1002 and the second simplified curved fragment 1004, so rendered two simplified curved portion as two different border portions to complete the first portion 1006 of the first simplified border (the remaining part of the first simplified border) and to complete the second portion 1008 of the second simplified border (the remaining part of the second simplified border).

In this implementation, the second set of rendering instructions further comprises instruction to render the first portion 1006 of the first simplified border of the first graphical object 202 and the second portion 1008 of the second simplified border of the second graphical object 204, the first portion 1006 and the second portion 1008 respectively excluding the first simplified curved fragment 1002 and the second simplified curved fragment 1004.

The server 102 then sends the second set of rendering instructions to the client device 112 which can render the first simplified graphical object and the second simplified graphical object on the display screen 118.

### The method 1100 then ends.

Performing steps of the method 1100 brings various technical advantages. One of the technical advantages consists in saving computational resources of a computing device which renders simplified graphical objects on the display screen, because the steps of method 1100 allow usage of one simplified border fragment in more than one figure. This effect can multiply, taking into account that there can be more than two graphical objects located in close proximity to each other, and that there can be several similar simplified border portions within each pair of simplified graphical objects.

Steps of the method 1100 were explained taken two two-dimensional graphical objects. As persons skilled in the art will understand, the steps of the method 1100 can be executed in regard three-dimensional objects, too.

Practical industrial application of described technology can be wide. As a non-limiting example, simplification of two-dimensional objects can be used in digital map services. As another non-limiting example, simplification of three-dimensional objects can be used in other types of computer applications (games, graphical modelling applications and the like).

Steps of the method 1100 were explained as they can be executed on the server 102 of the system 100. However, as persons skilled in the art will understand, the steps of the method 1100 can be executed on other computing devices, such as, for example, client device 112, with obvious adaptations. For example, if the steps of the method 1100 will be executed on the client device 112, the processor 116 may not send the first set of rendering instructions or the second set of rendering instructions to an external electronic device, but will send any one of them to video card for rendering simplified graphical objects on the display screen 118.

Modifications and improvements to the above-described implementations of the present technology may become apparent to those skilled in the art. The foregoing description is intended to be exemplary rather than limiting.

## Claims

1. A method of generating a first simplified border of a first graphical object (202, 302) and a second simplified border of a second graphical object (204, 404), the first graphical object (202, 302) and the second graphical object (204, 404) having respectively a first original border and a second original border, the first original border and the second original border comprising curved border portions being located in a close proximity, the method executable on a computing device, the method comprising:
applying a divider (502, 510, 520) having cells (504, 514, 524) to the first graphical object (202, 302) and the second graphical object (204, 404) such that
the first original border is split into a plurality of original fragments of the first original border, at least some original fragments of the first original border being original curved fragments,
the second original border is split into a plurality of original fragments of the second original border, at least some original fragment of the second original border being original curved fragments;
anchoring intersections (602, 604, 606, 608, 610, 612, 622, 624, 626, 628, 630, 802, 804, 806, 808) of the first original border and the second original border with the cells (504, 514, 524);
determining whether at least one cell (504, 514, 524) houses original curved fragments of both the first original border and the second original border;
responsive to a first cell (504, 514, 524) housing a first original curved fragment (902) of the first original border and a second original curved fragment (904) of the second original border, generating within the first cell (504, 514, 524) a first simplified curved fragment (1002) and a second simplified curved fragment (1004) by applying a simplification rule respectively to the first original curved fragment (902) and to the second original curved fragment (904), while keeping positions of anchored intersections (602, 604, 606, 608, 610, 612, 622, 624, 626, 628, 630, 802, 804, 806, 808) unchanged;
determining whether coordinates of the first simplified curved fragment (1002) and the second simplified curved fragment (1004) are similar within a pre-defined threshold of variance;
responsive to the first simplified curved fragment (1002) and the second simplified curved fragment (1004) being similar within the pre-defined threshold of variance, generating a first set of rendering instructions, the first set of rendering instructions:
being associated with a geometry of one of the first simplified curved fragment (1002) and the second simplified curved fragment (1004), and
being for rendering a common simplified curved portion representative of both the first simplified curved fragment (1002) and the second simplified curved fragment (1004).

2. The method of clause 1, wherein the first set of rendering instructions further comprises instruction to render a first portion (1006) of the first simplified border of the first graphical object (202, 302) and a first portion (1008) of the second simplified border of the second graphical object (204, 404), the first portion (1006) and the first portion (1008) respectively excluding the first simplified curved fragment (1002) and the second simplified curved fragment (1004).

3. The method of clause 2, wherein the first set of rendering instructions further comprises instructions, after rendering the common simplified curved portion representative of both the first simplified curved fragment (1002) and the second simplified curved fragment (1004), to use so rendered the common simplified curved portion as two identical border portions to complete the first portion (1006) of the first simplified border and to complete the first portion (1008) of the second simplified border.

4. The method of clause 1, wherein responsive to the first simplified curved fragment (1002) and the second simplified curved fragment (1004) being distinctive, the method further comprises generating a second set of rendering instructions to
render the first simplified border of the first graphical object (202, 302) using the first simplified curved fragment (1002), and to
render the second simplified border of the second graphical object (204, 404) using the second simplified curved fragment (1004).

5. The method of any one of clauses 1 to 4, wherein the computing device is a server (102), the method further comprising receiving, from a client device (112), a request for rendering instructions for rendering the first simplified border of the first graphical object (202, 302) and the second simplified border of the second graphical object (204, 404).

6. The method clause 5, further comprising sending the first set of rendering instructions being associated with the geometry of one of the first simplified curved fragment (1002) and the second simplified curved fragment (1004), and being for rendering the common simplified curved portion representative of both the first simplified curved fragment (1002) and the second simplified curved fragment (1004), to the client device (112).

7. The method of clause 6, wherein the first set of rendering instructions further comprises instructions to render a first portion (1006) of the first simplified border of the first graphical object (202, 302) and a first portion (1008) of the second simplified border of the second graphical object (204, 404), the first portion (1006) and the first portion (1008) excluding respectively the first simplified curved fragment (1002) and the second simplified curved fragment (1004).

8. The method of any one of clauses 1 to 4,
wherein the computing device is a client device (112) having a video card and a processor, the processor being operatively connected to the video card,
the method further comprising sending the first set of rendering instructions to render the first simplified border of the first graphical object (202, 302) and to render the second simplified border of the second graphical object (204, 404), the instructions being associated with the geometry of one of the first simplified curved fragment (1002) and the second simplified curved fragment (1004), and being for rendering the common simplified curved portion representative of both the first simplified curved fragment (1002) and the second simplified curved fragment (1004), by the processor to the video card.

9. The method of any one of clauses 1 to 8, wherein the first graphical object (202) and the second graphical object (204) are two-dimensional graphical objects.

10. The method of clause 9, wherein anchoring intersections (602, 604, 606, 608, 610, 612, 622, 624, 626, 628, 630) of the first original border and the second original border with the cells (504, 514) is anchoring intersection points (602, 604, 606, 608, 610, 612, 622, 624, 626, 628, 630).

11. The method of any one of clauses 1 to 10, wherein the divider (502, 510) is a two-dimensional grid (502, 510).

12. The method of any one of clauses 1 to 8, wherein the first graphical object (302) and the second graphical object (404) are three-dimensional graphical objects, and preferably wherein the divider (520) is a three-dimensional divider (520), and wherein
anchoring intersections (802, 804, 806, 808) of the first original border and the second original border with the cells (524) is anchoring intersection lines (802, 804, 806, 808).

13. The method of any one of clauses 1 to 12, wherein
the first original curved fragment (902) comprises sections that consecutively connect a plurality of vertexes of the first original curved fragment (902),
the second original curved fragment (904) comprises sections that consecutively connect a plurality of vertexes of the second original curved fragment (904), and wherein
the simplification rule comprises reducing number of vertexes of the first original curved fragment (902) and of the second original curved fragment (904).

14. The method of any one of clauses 1 to 13, wherein cells (504, 514, 524) are of a predetermined size, and preferably wherein a minimal number of cells housing original curved fragments of both the first original border and the second original border is predetermined, and responsive to a number of cells (504, 514, 524) housing original curved fragments of both the first original border and the second original border, after applying the divider (502, 510, 520) to the first graphical object (202, 302) and the second graphical object (204, 404) being under said predetermined number, the method further comprising changing a size of cells (504, 514, 524) until a number of cells (504, 514, 524) housing original curved fragments of both the first original border and the second original border reaches the predetermined number.

15. The method of any one of clauses 1 to 15, wherein determining whether coordinates of the first simplified curved fragment (1002) and the second simplified curved fragment (1004) are similar within the pre-defined threshold of variance, is performed by establishing any one, selected from:
coordinates of the first simplified curved fragment (1002) and coordinates of the second simplified curved fragment (1004) are the same, and
discrepancy between coordinates of the first simplified curved fragment (1002) and coordinates of the second simplified curved fragment (1004) are within a predetermined maximal threshold.

16. A computing device for generating a first simplified border of a first graphical object (202, 302) and a second simplified border of a second graphical object (204, 404), the first graphical object (202, 302) and the second graphical object (204, 404) having respectively a first original border and a second original border, the first original border and the second original border comprising curved border portions being located in a close proximity, the computing device comprising a processor and an information storage medium storing computer-readable instructions that, when executed, cause the processor to execute steps of the method of any one of clauses 1 to 15.
